# NEW EUROPEAN PATENT SPECIFICATION

(11) **EP 0 032 173 B2**
(45) Date of publication and mention of the opposition decision: **11.05.1994**
(45) Mention of the grant of the patent: 20.03.1985
(21) Application number: 80106936.0
(22) Date of filing: 10.11.1980
(51) Int. Cl.: C21C 5/48

(54) **Converter and apparatus for supplying fluids to a converter**
Konverter und Vorrichtung zum Versorgen eines Konverters mit Fluida
Convertisseur et dispositif pour alimenter un convertisseur en fluide

(30) Priority: 10.11.1979 JP 144949/79; 27.11.1979 JP 153146/79; 27.12.1979 JP 169412/79; 22.11.1979 JP 162261/79 U; 22.11.1979 JP 162262/79 U; 24.11.1979 JP 162852/79 U
(43) Date of publication of application: 22.07.1981
(73) Proprietor: NIPPON STEEL CORPORATION, Tokyo 100 (JP)
(72) Inventor: Seki, Masahiko, Kitakyushu City Fukuoka Prefecture (JP); Io, Yukito, Kitakyushu City Fukuoka Prefecture (JP); Wada, Koji, Kitakyushu City Fukuoka Prefecture (JP)
(74) Representative: VOSSIUS & PARTNER

(56) References cited:
- EP-A- 0 007 418
- DE-A- 1 907 081
- DE-A- 2 703 955
- DE-B- 1 142 257
- DE-B- 1 508 118
- DE-B- 1 583 284
- DE-B- 2 161 000
- DE-B- 2 326 754
- DE-B- 2 559 302
- DE-C- 277 612
- DE-C- 937 323
- DE-U- 1 953 843
- GB-A- 899 728
- US-A- 2 847 035
- US-A- 2 960 354
- US-A- 3 893 658
- US-A- 3 938 790
- Oelhydraulik und Pneumatik, 13, (1969), Nr. 10, p. 488-489
- Oelhydraulik und Pneumatik, 14, (1970), Nr. 7, p. 300-306
- Oelhydraulik und Pneumatik, 16, (1972) Nr. 7, p. 296-302
- Montanhydraulik, Prüf- und Korrosionsvorschrift für Drehverbindungen,Id-Nr. 651561 Ausgabe 8/79
- Deutsche Hebe- und Fördertechnik, 10/79 (475) S.6
- Handbuch "Dichtelemente", Bd.II, Asbest- und Gummiwerke, M. Merkel KG, Hamburg-Wilhelmsburg, 1970, S. 239-242
- Kompensatoren-Handbuch "Hydra", Metallschlauch-Fabrik Pforzheim, Ausgabe 1971, S. 420-421

## Description

### Background of the Invention

This invention relates to a converter comprising an apparatus for supplying a plurality of different fluids, independently and simultaneously, to the bottom-blown or too-and-bottom blown converter through a metal-refining gas injecting nozzle and an annular nozzle to inject cooling fluids to protect the refining gas injecting nozzle, both nozzles being provided in the converter bottom.

Generally, apparatus for supplying oxygen, hydrocarbon gas, nitrogen gas, cooling water and the like, independently and simultaneously, to a bottom- or top-blown converter includes a rotary joint coupled to the shaft of a trunnion ring supporting the converter. The rotary joint has a plurality of fluid passageways on the inside, which lead to an injection nozzle or a converter cooling device by way of passageways in the trunnion shaft or pipes passed through sleeves fitted in the trunnion shaft.

Conventionally, the rotary joint for the top- and bottom-blown converters has been a simple assembly made up of a plurality of coaxially disposed pipes. As the kind of injecting fluids increases, the number of coaxial pipes is increased accordingly. Usually, putting up to about four pipes or so, one over another coaxially, is practicable, but not more. The difficulty lies in the need to keep the centers of pipes of different diameters on the same axis.

As with the conventional bottom-blown converters etc., therefore, two pipes having different diameters have been concentrically arranged inside the rotary joint to provide separate passageways for the refining oxygen and protective gas, with the pipings leading from the trunnion ring to the bottom being branched to supply the fluids to the individual nozzles. With this design, in case any particular nozzle suffers extraordinarily rapid erosion, the flow rates, and their ratio, of the oxygen and protective gas supplied to the nozzle in question cannot be controlled independently. Therefore, erosion of a single nozzle endangers the life of the entire bottom. Even if the bricks aroune other tuyeres are still usable, the entirety of the bottom must be changed, causing a great economic loss.

If the supply of protective gas to an extraordinarily eroded nozzle is increased to provide more cooling, skull adheres to the exit and of the tuyere concerned, thereby protecting the brick near the tuyere and lowering the wearing rate of the damaged nozzle. By this means, all tuyeres are allowed to wear off uniformly. When, on the other hand, tuyere clogging is likely to occur, the trouble can be eliminated by reducing the supply of protective gas and, thereby, melting away the excess skull. To achieve this type of control, a flow-rate control valve must be provided to a protective gas conduit leading to each individual nozzle. However, flow-rate control valves cannot be provided close to the converter shell because of high temperatures. Even if the valves were installed, they might possibly be damaged by the falling skull. Besides, it is very difficult to provide effective thermal protection to the electrical wiring etc. for valve operation. Accordingly, the flow-rate control valves must be considerably kept away from the converter.

Another method commonly employed plugs the extraordinarily worn-down nozzle with skull or refractory. But this method, of course, has its limit, because satisfactory refining cannot be accomplished when too many tuyeres are plugged. At any rate, an early bottom change is inevitable.

DE-A-337 323 describes a rotary joint for supplying fluids between a rotary assembly and a fixed casing. Although this joint comprises coaxial pipes, it is not suitable to fulfil the special requirements of converters, namely the problems related to the high temperature.

In US-A- 3 893 658 a rotary joint is shown having concentrically disposed pipes and shut-off valves which are mounted at gas pipes leading to the tuyeres at the bottom of a vessel.

DE-B-2 559 302 discloses a rotatable pipe connection in which supply pipes are fed by casing-like flanges verging into said pipes by a cone-like duct.

DE-A-1 907 081 comprises a rotatable connection having a plurality of axially spaced, circular communication grooves which are located between corresponding surfaces of a stator and a rotor, respectively, with supply pipes feeding said grooves. A similar principle is also illustrated by two articles in the magazine of "Ölhydraulik und Pneumatik" (1969, No. 10, pages 488 to 489 and 1970, No.7, pages 300 to 306) for hydraulics in building and lifting machinery.

### Summary of the Invention

This invention is intended for solving the aforementioned problems with the fluids supply apparatus for converters. An object of this invention is to provide a converte comprising, an apparatus for supplying many kinds of fluids that is easy to manufacture.

Another object of this invention is to provide a converter comprising an apparatus for supplying fluids that is capable of independently controlling the flow rates of many kinds of fluids.

These objects are achieved by the converter according to claims 1 and 9.

The invention further provides a method for supplying fluids to a converter according to the invention; according to this method the sealing gas is filled in the annular space between said inner pipe and outer pipes.

The converter according to this invention is easy to manufacture because the rotary joint thereof does not comprise a plurality of pipes and cylinders laid one over another. Besides, this feature permits connecting many fluid supply pipes and conduits to the rotary joint. Accordingly, fluids can be supplied independently to each tuyere. Also, a flow-rate control valve provided before the rotary joint permits regulating the fluid injection rate for each tuyere. This, in turn, permits controlling the cooling effect from tuyere to tuyere, thereby preventing the extraordinary erosion of the tuyeres and surrounding brick and, consequently, lengthening the vessel life remarkably.

The refining and protective gases used in converters are usually oxygen and hydrocarbon gas, which are very likely to cause an explosion if they are mixed at the rotary joint.

According to the invention the inner pipe and the outer pipe are coaxially fitted in the casing. While the refining gas is passed through the inner pipe, the protective gas runs through the passageway provided in the rotary assembly fitted in the casing. Thus, the refining and protective gases are separated from each other by the walls of the inner pipe and the outer pipe and the annular space therebetween filled with a cooling medium, thereby eliminating the danger of explosion that might occur when the two gases are mixed.

According to the present invention, the same number of protective gas passageways, independent from each other, as the tuyeres formed through the converter can be provided in the rotary assembly. This permits the quantity of the protective gas blown through each tuyere to be controlled individually according to the condition in the converter by means of the flow-rate control valve attached to the protective gas supply pipe connected to each passageway, and provided for in a preferred embodiment.

The prior art, namely the DE-A-937 323 discussed above, does not mention at all the claimed combination of various protective gas and sealing gas pipes coaxially to each other in order to take into account the cooling conditions of a converter.

### Description of the Drawings

Fig. 1 is a schematic cross-sectional view of a converter and a conventional fluids supply apparatus.

Fig. 2 is a schematic view of a converter having fluids supply apparatus of this invention, with the converter illustrated cross-sectionally.

Fig. 3 is a cross-sectional view of a rotary joint of the apparatus shown in Fig. 2.

Fig. 4 is a partly cross-sectional perspective view showing part of the rotary joint shown in Fig. 2.

Fig. 5 is a cross-sectional view showing a modified form of a communication groove in the rotary joint shown in Fig. 3.

Fig. 6 is a cross-sectional view showing another embodiment of the rotary joint.

Fig. 7 is a cross-sectional view taken along the line VII-VII of Fig. 6.

Fig. 8 is a cross-sectional view showing still another embodiment of the rotary joint.

Fig. 9 is a cross-sectional view taken along the line IX-IX of Fig. 8.

Fig. 10 is a cross-sectional view showing yet another embodiment of the rotary joint.

Fig. 11 is a partly cross-sectional view showing an example of a fluid pipe passing through a trunnion ring and shaft.

Figs. 12 and 13 show a sleeve fitted over a trunnion ring and shaft; Fig. 12 shows a longitudinal cross section of the sleeve, and Fig. 13 is a transverse cross section.

Fig. 14 is a side elevation of a rotary joint support.

Fig. 15 is a front view of the support shown in Fig. 14.

Fig. 16 shows a device to reduce the reactive force of fluids working on the fluid supply pipes connected to the rotary joint, placed in position.

Fig. 17 is a detail view of the fluid reactive force reducing device shown in Fig. 16.

Fig. 18 shows another embodiment of the fluid reactive force reducing device connected to a fluid supply pipe.

Fig. 19 is a detail view of the fluid reactive force reducing device shown in Fig. 18.

Fig. 20 shows a modification of the device shown in Fig. 19.

Fig. 21 is a cross-sectional view showing a still further embodiment of the rotary joint constituting the fluids supply apparatus of the converter according to this invention.

### Description of the Preferred Embodiments

To facilitate the understanding of the characteristics and favorable results of this invention, a conventional apparatus for supplying fluids to converters will be described first.

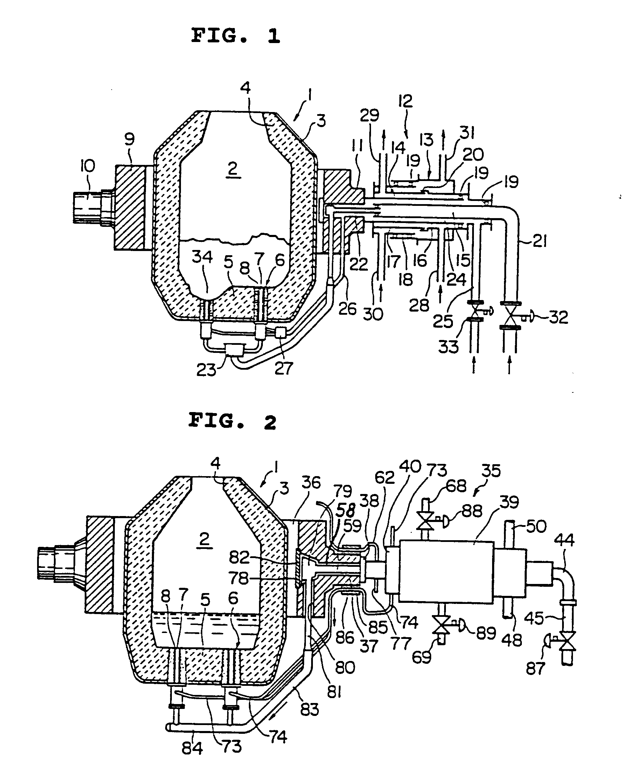

Fig. 1 shows a top-and-bottom blown converter and an accompanying fluids supply apparatus.

The vessel 2 of a top-and-bottom blown converter 1 comprises a steel shell 3 and a refractory lining 4 provided on the inside thereof. The bottom 5 is provided with at least two tuyeres 6, each tuyere 6 having a nozzle 7 for injecting metal-refining oxygen and an annular nozzle 8, surrounding said nozzle 7, for injecting a vessel-protecting gas (such as propane gas).

The vessel 2 is supported by a trunnion ring 9 which rests on horizontally extending trunnion shafts 10 and 11. The trunnion shafts 10 and 11 are supported by bearings (not shown). One trunnion shaft 10 is coupled to a driving system (not shown) comprising a motor, gear transmission, etc., which tilts the vessel 2 by way of the trunnion ring 9. The other trunnion shaft 11 is linked to a rotary joint 12 which supplies oxygen and other fluids to said nozzles 7 and 8 and a vessel cooling system (not shown).

The rotary joint 12 comprises a casing 13 and a rotary assembly 14 rotatably fitted therein. The rotary assembly 14 comprises an inner pipe 15, outer pipe 16, inner cylinder 17 and outer cylinder 18 which are disposed coaxially and isolated from one another. A bearing 19 and a sealing packing 20 are interposed between the casing 13 and rotary assembly 14 to facilitate the rotation of the rotary assembly 14 and prevent the leakage of the fluids between the casing 13 and rotary assembly 14.

Coupled to the trunnion shaft 11, the rotary assembly 14 rotates integrally with the trunnion ring 9 and, therefore, vessel 2. The inner pipe 15 of the rotary assembly 14 communicates with an oxygen supply pipe 21, which is fixed to the casing 13, at the far end and with an oxygen pipe 22, which passes through the trunnion ring 9 and trunnion shaft 11, at the near end. The oxygen pipe 22 connects with said oxygen injection nozzle 7 through a header 23. An annular space 24 between the inner pipe 15 and outer pipe 16 communicates with a protective gas supply pipe 25 fastened to the casing 13. The near end of the annular space 24 communicates with a protective gas pipe 26 passing through the trunnion ring 9 and trunnion shaft 11. The protective gas pipe 26 leads to the protective gas injection nozzle 8 through a header 27.

A cooling water supply pipe 28 connected to the casing 13 communicates with an entry-side cooling water pipe 29 fastened to the inner cylinder 17 of the rotary assembly 14. The cooling water supplied therefrom returns to an exit-side cooling water pipe 30 fastened to the outer cylinder 18 after passing through the vessel cooling system (not shown). The returned cooling water is discharged through a cooling water discharge pipe 31 connected to the casing 13.

In the conventional fluids supply apparatus described above, oxygen and a protective gas, the quantities of which having been regulated by flow-rate control valves 32 and 33 provided to the oxygen supply pipe 21 and protective gas supply pipe 25 respectively, are supplied to the injection nozzles 7 and 8 through the headers 23 and 27. Therefore, it is impossible to control the flow rates of the two gases independently at the individual nozzles, as mentioned previously. Fig. 1 shows a heavily worn-out part 34 of the bottom refractory near a tuyere 6, the wearing being due to incapability of independent flow rate control.

As stated before, the conventional rotary joint comprises the inner pipe 15, outer pipe 16, inner cylinder 17 and outer cylinder 18 which are concentrically arranged, one over another. Accordingly, an attempt to control the flow rates of fluids at individual nozzles calls for increasing the number of pipes and/or cylinders according to the number of nozzles. This naturally complicates the structure of the rotary joint and makes its manufacture very difficult.

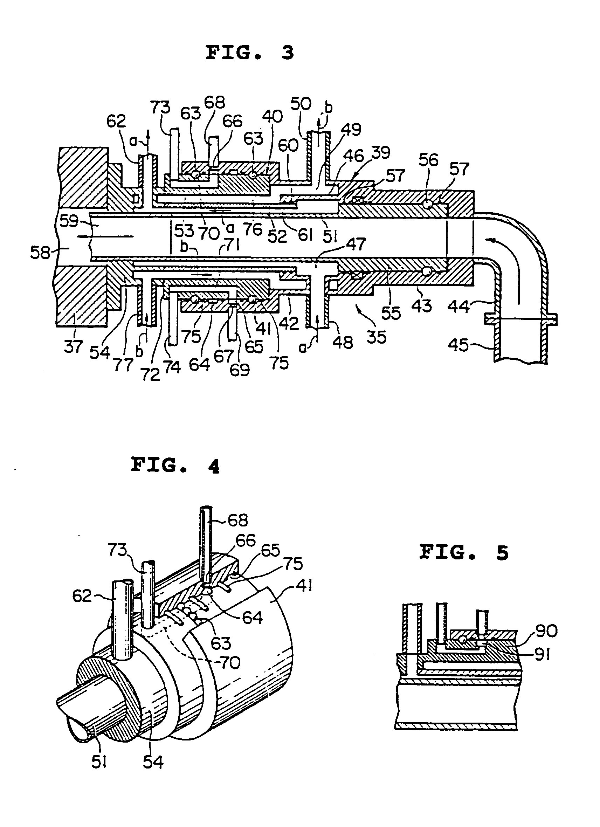

Figs. 2, 3 and 4 show a first embodiment of this invention. Since the vessel in Fig. 2 is similar to the above-described conventional one, the same reference numerals as used in Fig. 1 are employed for designation.

As evident from Figs. 3 and 4, a fluids supply apparatus according to this invention has a rotary joint 35 whose structure is completely different from that of the conventional one. As shown in Fig. 2, the rotary joint 35 is fastened, by means of a flange 38, to the end surface of a non-driven trunnion shaft 37 projecting horizontally from a trunnion ring 36. The rotary joint 35 consists mainly of a casing 39 and a rotary assembly 40.

As shown in Fig. 3, the casing 39 comprises three cylindrical members 41,42 and 43 which are assembled stepwise, with an elbow 44 fastened to the far end thereof (at the right of the figure). The elbow 44 is coupled to an oxygen supply pipe 45. The casing 39 is open at the near end, in which the rotary assembly 40 is fitted. The middle cylindrical member 42 of the casing 39 has on its inside a cylindrical projection 46 that coaxially extends toward the near end (at the left of the figure). The middle cylindrical member 42 is connected to a cooling water supply pipe 48 communicating with an annular space 47 formed inside the projection 46 and a cooling water discharge pipe 50 communicating with an annular space 49 formed between the middle cylindrical member 42 and projection 46, the two pipes being circumferentially spaced from each other.

The rotary assembly 40 has an inner pipe 51, outer pipe 52 and outer cylinder 53, the outer pipe 52 and outer cylinder 53 being coaxially connected to a body 54 at the near end.

The inner pipe 51 has a cylindrical-block-like sliding part 55 at the far end thereof, which is rotatably fitted inside the cylindrical member 43 of the casing 39. Between the cylindrical members 42 and 43 and the sliding part 55 are interposed a ball bearing 56 to facilitate the smooth rotation of the rotary assembly 40 and O-rings 57 to prevent the leakage of the fluid therefrom. The far end of the inner pipe 51 communicates with said elbow 44. The near end of the inner pipe 51 connects with an intermediate pipe 59 inserted in a horizontal opening 58 provided in the trunnion ring 36 and trunnion shaft 37.

Extending to the near end of the cylindrical projection 46 of the casing 39, the far end of the outer pipe 52 is rotatably fitted therein. O-rings 60 are provided where the outer pipe 52 is fitted in the projection 46 to prevent the leakage of the fluid. An annular space 61 formed between the inner pipe 51 and outer pipe 52 communicates with the annular space 47 inside the projection 46 at the far end thereof, and with an entry-side cooling water pipe 62 connected to the body 54 at the near end thereof. Therefore, the cooling water supplied from the cooling water supply pipe 48 flows through the annular space 61 between the inner pipe 51 and outer pipe 52 as indicated by the arrow a. then to the vessel cooling system (not shown) through the entry-side cooling water pipe 62.

The outer cylinder 53 of the rotary assembly 40 is rotatably fitted in the cylindrical member 41 at the near end of the casing 39, as shown in Figs. 3 and 4. Ball bearings 63 are interposed between the outer cylinder 53 and the cylindrical member 41 to facilitate the rotation of the rotary assembly 40. Two circular communication grooves 64 and 65 are cut in the internal surface of the cylindrical member 41 in such a manner as to be spaced apart along the longitudinal axis thereof. The cylindrical member 41 of the casing 39 is provided with communication ports 66 and 67 which respectively connect the communication grooves 64 and 65 to the outside. To the cylindrical member 41 are also connected protective gas supply pipes 68 and 69 so as to communicate with the communication ports 66 and 67, respectively. The outer cylinder 53 of the rotary assembly 40 is provided with conduction ports 70 and 71 which respectively open into the communication grooves 64 and 65. The conduction ports 70 and 71 turn toward the inside of the outer pipe 53 from where they open to the communication grooves 64 and 65, bending first toward the near end along the longitudinal axis of the cylindrical member 41 and then toward the outside to open into an exposed part 72 of the outer pipe 53 emerging from the casing 39. The conduction ports 70 and 71 are circularly spaced from each other, and protective gas pipes 73 and 74 are connected to the exposed part 72 so as to communicate with the exit end of the communication ports 70 and 71, respectively. Accordingly, the protective gas supplied from the protective gas supply pipes 68 and 69 flows to the protective gas pipes 73 and 74 by way of the communication ports 66 and 67, communication grooves 64 and 65, and conduction ports 70 and 71.

Sealing O-rings 75 are provided on both sides of each of the communication grooves 64 and 65. The far end of an annular space 76 formed between the outer pipe 52 and outer cylinder 53 communicates with the annular space 49 formed by the middle cylindrical member 42 of the casing 39 and the projection 46.

The near end of the annular space 76 between the outer pipe 52 and outer cylinder 53 communicates with an exit-side cooling water pipe 77 fastened to the body 54 of the rotary assembly 40. The cooling water returned from the vessel cool-ing system (not shown) through the exit-side cooling water pipe 77 passes through the annular space 76 between the outer pipe 52 and outer cylinder 53 as indicated by the arrow b, then being discharged through the cooling water discharge pipe 50.

As shown in Fig. 2, the horizontal opening 58 communicates with a chamber 78 provided in the trunnion ring 36. The chamber 78 contains a manifold 79, and the near end of the middle pipe 59 passes through the far-end wall of the manifold 79 and is welded thereto. The trunnion ring 36 has a vertical opening 80 extending downward from the chamber 78, with an intermediate pipe 81 passed through the vertical opening 80. Passing through the bottom wall of the manifold 79, the upper end of of the intermediate pipe 81 is welded to the manifold 79. After being thus welded, the manifold 79 is covered with a blind plate 82.

An oxygen pipe 83, connected to the lower end of the intermediate pipe 81, leads to a pipe 84 extending below the bottom 5. Oxygen is blown into the vessel through the oxygen injection nozzle 7 branched from the pipe 84. A sleeve 85 is fitted around the trunnion shaft 37. The sleeve 85 is provided with a plurality of horizontal openings 86 which are circularly spaced from each other and, extending axially. The protective gas pipes 73 and 74, entry- and exit-side cooling water pipes 77 and 62, all extending from the rotary assembly 40, are fastened to the sleeve 85 so as to communicate with the horizontal openings 86. Extending beyond the sleeve 85 toward the bottom 5, the protective gas pipes 73 and 74 are connected to the annular protective gas injection nozzle 8.

As the trunnion ring 36 tilts, the rotary assembly 40 connected thereto rotates, integrally with the trunnion ring 36, with respect to the casing 39. The rotation of the rotary assembly 40 does not cut off the communication between the oxygen supply pipe 45 and oxygen pipe 83, the protective gas supply pipes 68 and 69 and protective gas pipes 73 and 74, and the cooling water supply pipe 48 and entry- and exit-side cooling water pipes 62 and 77 as well as cooling water discharge pipe 50.

In operating the converter of this type, a uniform quantity of oxygen, regulated by a flow-rate control valve 87, is supplied to each tuyere 6. The injection rate of the protective gas must be controlled for each tuyere 6 depending on the degree of erosion of the bottom 5. For this purpose, the protective gas supply pipes 68 and 69 connected to the rotary joint 35 of this invention have a flow-rate control valve 88 and 89 as shown in Fig. 2. This permits independent control of the protective gas injection rate for each individual tuyere 6, thereby preventing extraordinary wearing off of the vessel refractory through the control of cooling effect.

Instead of the communication grooves 64 and 65 provided in one cylindrical member of the casing 39, a communication groove 91 may be cut in the external surface of an outer cylinder 90 of a rotary assembly, as shown in Fig. 5. Also, a communication groove may be provided in both the casing and outer cylinder.

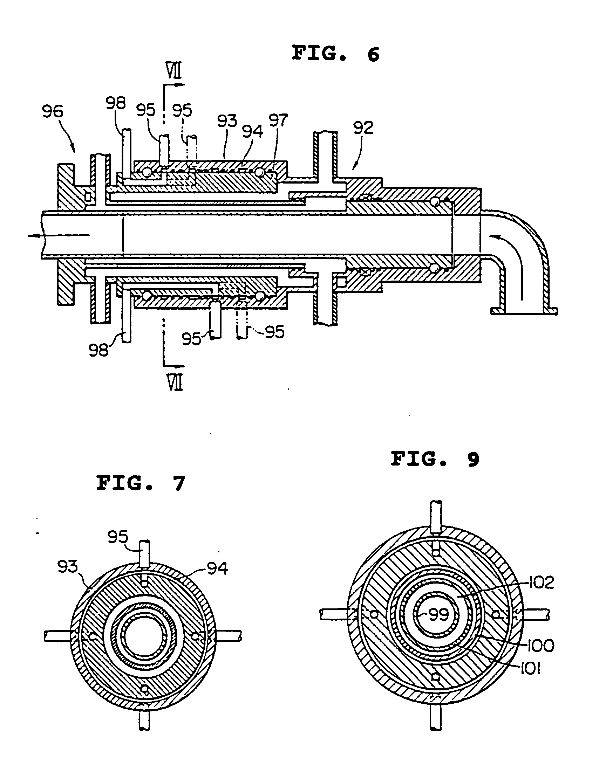

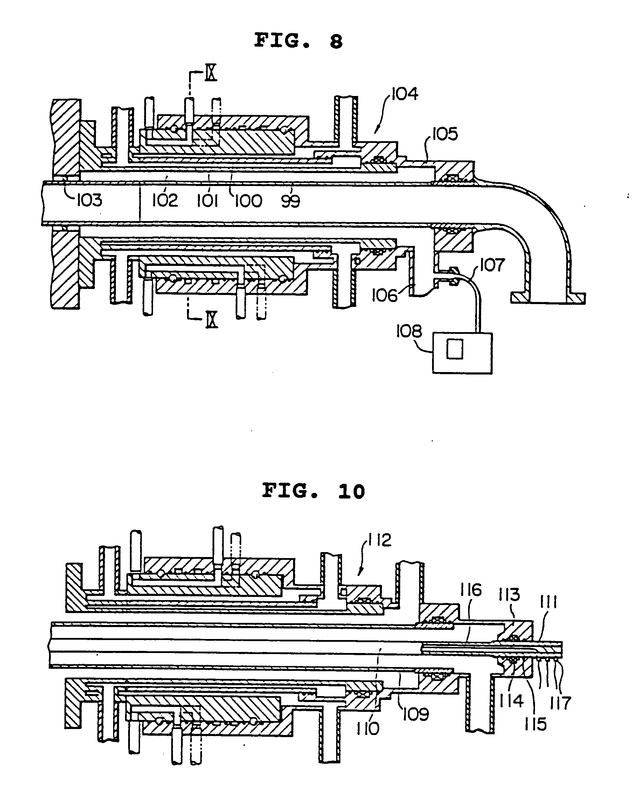

Figs. 6 and 7 show another embodiment of this invention. While two protective gas pipes were connected to the rotary joint in the above-described embodiment, four protective gas pipes are now connected to the rotary joint of this second embodiment, which is similar to the first embodiment in other basic structure. Therefore, no description and reference numerals are given to those parts in Figs. 6 and 7 which are similar to the parts in Fig. 3.

Four communication grooves 94 are cut in a cylindrical member 93 constituting a casing 92, the grooves 94 being spaced apart along the longitudinal axis of the cylindrical member 93. Four protective gas supply pipes 95, communicating with the individual grooves 94, are fastened to the cylindrical member 93. Four protective gas pipes 98, communicating with the communication grooves 94, are connected to an outer cylinder 97 of a rotary assembly 96. Composed as described above, this embodiment permits an independent supply of protective gas to each of four tuyeres. An increase in the number of the protective gas pipes can be well coped with by somewhat lengthening the cylindrical member 93 of the casing 92 and the outer cylinder 97 of the rotary assembly 96, without laying more pipes and cylinders. This results in a simple structure and facilitates manufacturing.

Figs. 8 and 9 show a third embodiment of this invention, which is basically similar to the second embodiment. Therefore, no description and reference numerals are given to the similar parts.

As seen, a middle pipe 101 is coaxially provided between an inner pipe 99 and an outer pipe 100. An annular space 102 formed between the inner pipe 99 and middle pipe 101 is closed by a shut-off plate 103 at the near end and opens into a cylindrical member 105 of a casing 104 at the far end. To the cylindrical member 105 is connected a short pipe 106, which, in turn, is connected to a gas analyzer 108 by way of a conduit 107. Having a built-in pump (not shown), the gas analyzer invariably sucks, and analyzes, the gas from the annular space 102. When detecting a leakage of oxygen from the inner pipe 99, the gas analyzer 108 gives an alarm to the operator, thus preventing the fire or explosion due to the leaked oxygen. A shut-off gas, such as an inert gas, may be passed through said annular space. Also, the shut-off plate 103 may be removed to open the annular space 102 into the atmosphere. Furthermore, the gas analyzer 108 may be eliminated, whereupon the annular space 102 serves as a shut-off space.

Fig. 10 shows a fourth embodiment of this invention, which is a modification of the third embodiment. Accordingly, no description is given as to such parts as are self-evident from the description of the foregoing embodiments.

In this embodiment, a conduit 110 is coaxially provided inside an inner pipe 109. The far end 111 of the conduit 110 passes through a cylindrical member 113 making up a casing 112 where a ball bearing 114 and a sealing O-ring 115 are provided. Therefore, the conduit 110 can sealedly rotate integrally with the inner pipe 109. An electric wire 116, which supplies electric power to the auxiliary equipment of the converter or transmits signals from various sensors, is passed through the conduit 110. The electric wire 116 is connected to a power source or a signal processing unit (not shown) by way of an electrical joint 117, such as a slip ring, provided on the far end 111 of the conduit.

Usually in a bottom-blown converter, all metal-refining gas is injected through the tuyeres at the bottom. To permit supplying this large quantity of gas, many tuyeres (ranging from 12 to 30 in number) are used. To control the flow rate of the individual tuyeres, control valves and other intricate auxiliary equipment must be installed in the vicinity of the bottom. From the viewpoint of manufacturing and maintenance, such an arrangement is practically impossible. By contrast, use of the converter according to this invention simplifies the bottom structure and facilitates the gas control operation.

In the foregoing first to fourth embodiments, the rotary joint was coupled to the non-driven side trunnion shaft. Nevertheless, the rotary joint may also be coupled to either the driven-side trunnion shaft or the trunnion shafts on both sides. When the rotary joint is connected to both trunnion shafts, the oxygen and cooling water supply pipes, for example, are connected to one shaft and the protective gas supply pipe to the other.

Likewise, the inner pipe of the rotary joint need not always be used for passing the refining gas alone; the protective gas or cooling water is passable, as well.

Other fluids than the protective gas may be passed through the conduction port, too.

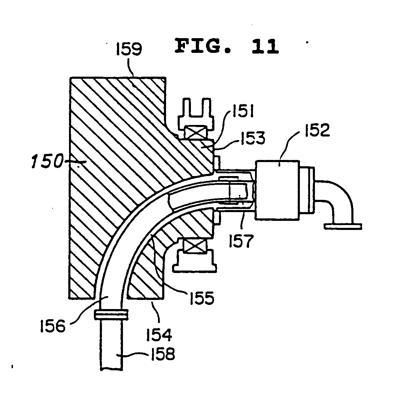

Fig. 11 shows an improved example of the passageway in the trunnion ring and shaft through which oxygen or other fluid passes.

Through a trunnion ring 150 and trunnion shaft 151 is provided a conduction port 155 that extends from the end surface 153 of the trunnion shaft 151 facing a rotary joint 152 to the bottom surface 154 of the trunnion ring 150 substantially along a quadrant. A conformably curved conduit 156 is passed through the conduction port 155. The conduit 156 is connected to an inner pipe 157 of the rotary joint 152 at the far end, and a gas pipe 158 carrying oxygen etc. at the near end.

In the above structure, the conduction port 155 itself may be used as a passageway eliminating the conduit 156. In that case, the inner pipe 157 is connected, directly or through an intermediate pipe, to the end surface 153 of the trunnion shaft 151 so as to communicate with the conduction port 155, and the gas pipe 158 to the bottom surface 154 of the trunnion ring 150. Or, the conduction port 155 may be opened in the upper surface 159 of the trunnion ring 150.

When the passageway through the trunnion ring and shaft is thus formed, the following favorable results are obtainable:
(1) A curved fluid pipe can be passed through the short non-driven side trunnion shaft.
(2) The absence of joint facilitates manufacture, assures easy disassembly when the curved pipe breaks, and eliminates the necessity for removing the steel shell or stopping the converter operation.
(3) With a bottom-blown or top-and-bottom blown converter introducing such fluid as oxygen or oxygen plus powder lime, it is a common practice to bend a pipe at a curvature not smaller than 3 times the diameter of the pipe, in order to prevent the oxygen-induced combustion or explosion of the piping. From this viewpoint, the above-described improved structure insures a high degree of safety.

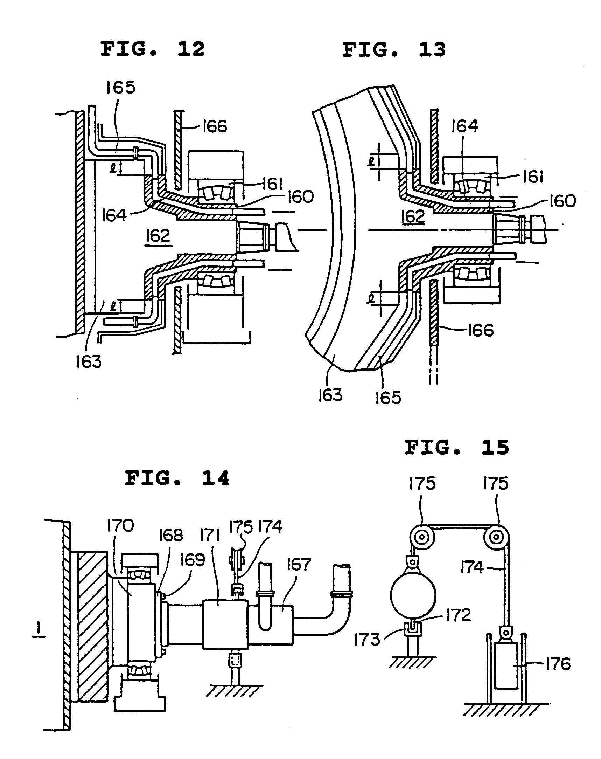

Figs. 12 and 13 show an improved example of the sleeve mounted on the trunnion shaft.

Provided only to the inside of the bearing section supporting a trunnion ring, the conventional sleeve has been connected to the exit end thereof by welding, screwing in, or other method. In this area, a cover is provided to protect the piping from a large quantity of skull falling from the hood above the converter top. When excess skull falls, however, the cover is deformed to damage the piping. To repair or replace the damaged piping, the cover must be removed first, which, however, cannot be achieved until a large heat-insulating plate, protecting the bearing section, has been removed. All this, plus the limited space of this part, has resulted in a difficult operation.

In order to overcome this difficulty, the improved sleeve, having a funnel-like shape, extends far enough to cover a trunnion shaft joint.

As shown in Figs. 12 and 13, a sleeve 160, shaped like a funnel, extends from inside a bearing 161 to the side of a trunnion ring 163, covering a trunnion shaft joint 162, with a fluid passageway 164 pierced inside. The preferable distance x between the top and bottom surface of the trunnion ring or the top and bottom end of the trunnion shaft joint, respectively, and the end of the sleeve 160 is between 0 and 500 mm. Or, the sleeve end may slightly project beyond the top and bottom and both sides of the trunnion ring.

Composed as described above, this sleeve 160 facilitates the welding to vessel-side piping 165, thus increasing the reliability of the equipment. In case the piping or piping joint fractures, easy access can be attained from above the trunnion ring, without removing a heat-insulating plate 166, which is greatly conducive to shortening the downtime.

Metal-refining oxygen and cooling propane and natural gas, and kerosene are passed through this sleeve. This is because the fracture of the piping and piping joint can possibly lead to explosion, or to a counter flow, and leakage, of molten metal. This improved sleeve eliminates such dangerous possibilities.

The rotary joint is a considerably large and heavy piece of equipment, so that the reactive force of the fluids works thereon. To support its own weight and the reactive force of the fluids, the rotary joint is upheld by a supporting device.

Generally, the rotary joint support must satisfy the following requisites:
(1) The fixed side, or the casing, of the rotary shaft must be held stationary so as not to rotate.
(2) After a long period of use, the trunnion shaft tends to tilt about the spherical bearing, as a result of which the rotary joint rotates eccentrically. Notwithstanding such eccentric rotation, the rotary joint must be capable of moving up and down, and back and forth, without strain.
(3) The bending moment exerted on the flange section by the weight of the rotary joint itself and the reactive force of various fluids must be reduced to a minimum.

Figs. 14 and 15 show an example of the rotary joint support satisfying the above requisites.

The flange 168 of a rotary joint 167 is fastened to the end of a trunnion shaft 170 with bolts 169. An anti-rotation pin 172 projecting from the bottom of the fixed part or casing 171 of the rotary joint 167 fits somewhat loosely in an anti-rotation pin support 173, leaving an adequate clearance therebetween. Meanwhile, the fixed part 171 is suspended from above by a rope 174 attached to the top thereof. The rope 174 is linked to a weight 176 by way of pulleys 175. The weight 176 is supported by suitable means so as not to swing back and forth.

By using a weight that weighs equal to or lighter than the rotary joint, the bending moment due to the weight of the rotary joint itself can be substantially eliminated. Suspended by the rope, the rotary joint can move freely as the weight moves up and down. In addition, the simple structure causes few troubles as well as offers cost economy.

The maximum bending moment working on the flange of the rotary joint is due to the reactive force of the oxygen, compressed air, etc. passed through the passageway therein. Since the rotary joint, as stated before, rotates eccentrically as the trunnion shaft inclines with the deformation of the converter, the fluid supply pipes are joined together by use of expansion pipes, flexible hoses, and the like.

When highly pressurized fluids are supplied. these expansion pipes and flexible hoses are subjected to great reactive forces. Meanwhile, a small-diameter flexible hose, up to approximately 80 mm in diameter, can be readily bent with a small force. When the diameter exceeds 80 mm, the hose becomes too rigid to be bent easily. In order to bend such larger-diameter hoses with a small force, the length must be increased. All in all, the use of large-diameter flexible hoses is practically difficult.

The expansion pipe receives a very great reactive force, which develops a great bending moment at the flange of the rotary joint. If the pipe diameter is 200 mm and the fluid pressure p is 10 kg/cm² (98.1 N/cm², the resulting reactive force can be derived from F = p × A (where A = the cross-sectional area of the pipe = 329 cm²). Hence, the force F = 3290 kg (32 275 N).

This great reactive force often breaks the flange of the rotary joint. The influence is particularly great with the bottom-blown or top-and-bottom blown converter in which the oxygen pressure reaches as high as between 5 and 10 kg/cm² (about 50 to 100 N/cm²) and the pipe diameter ranges from 150 to 300 mm.

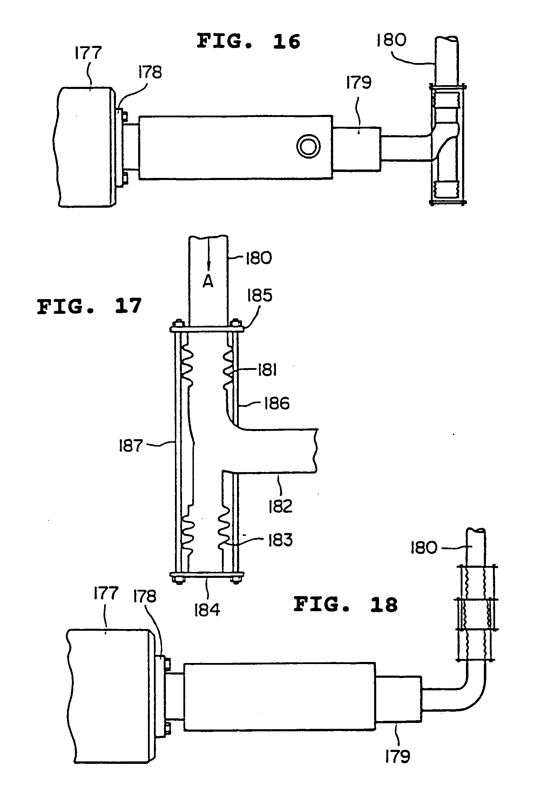

Figs. 16 through 20 show a device to reduce the reactive force of fluid, characterized by providing a pressure balancing expansion section in the flexible fluid supply pipe.

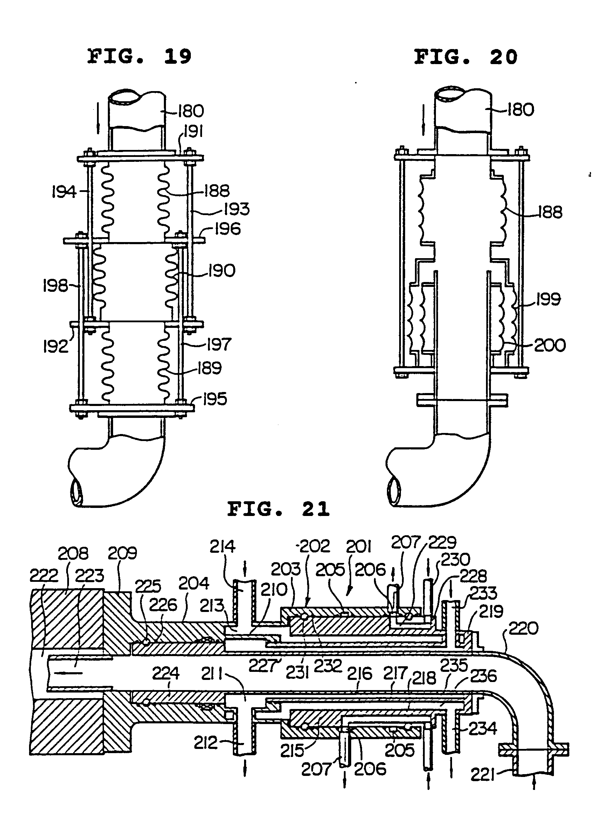

Fig. 16 is an overall view, and FIG. 17 a partially enlarged view, of the fluid reactive force reducing device. Reference numeral 177 designates a trunnion shaft,178 the flange of a rotary joint, and 179 the rotary joint. Bent in the vicinity of the passageway in the rotary joint 179, a supply pipe 180 is coupled thereto. As enlarged in Fig. 19, the supply pipe 180 leads to a supply pipe 182 through a first flexible pipe 181. A second flexible pipe 183 is provided on the extension of the supply pipe 180 which, actually, bends to reach the supply pipe 182. The lower end of the flexible pipe 183 is covered with a blind flange 184, which is connected to a flange 185 on the first flexible pipe 181 by means of connecting rods 186 and 187 fastened by nuts (or, otherwise, direct to the supply pipe 180).

With this structure, a high-pressure fluid flowing in the direction of the arrow A applies pressure on the blind flange 184 of the flexible pipe 183, which pressure, however, being received by the connecting rods 186 and 187 causing no trouble. The fluid pressure acts to expand the flexible pipes 181 and 183. whereupon that pressure balances with the force working on the blind flange 184 to eliminate the reactive force of the fluid.

Another embodiment shown in Figs. 18 and 19 comprises a pressure-balancing flexible pipe provided in the straight section of the supply pipe 180. As shown in Fig. 19 flexible pipes 188 and 189 having the same diameter are connected together, with a flexible pipe 190 having an inside diameter √2 times that of the flexible pipes 188 and 189 interposed therebetween. The flange 191 of the flexible pipe 188 is connected to a flange 192 joining together the flexible pipes 189 and 190, by means of connecting rods 193 and 194 fastened with nuts. Likewise, the flange 195 of the flexible pipe 189 is connected to a flange 196 joining together the flexible pipes 188 and 190 using connecting rods 197 and 198 fastened with nuts. When the pressurized fluid flowing in the direction of the arrow applies pressure, the force working on the flange 196 and the force to expand the flexible pipe 189 are balanced, the latter being supported by the connecting rods 197 and 198. Likewise, the force working on the flange 192 balances with the force to expand the flexible pipe 188, the latter being supported by the connecting rods 193 and 194. Thus the reactive force of the fluid is eliminated.

Fig. 20 shows a modification of the embodiment shown in Fig. 19, in which a flexible pipe 199 lies over another flexible pipe 200. This arrangement permits eliminating one set of coupling rods.

As understood from the above, the fluid reactive force reducing device is a simple practical unit that can surely eliminate the bending moment working on the rotary joint flange.

Fig. 21 shows a still further embodiment of rotary joint. In this rotary joint, pipes are connected in a reversed fashion as compared with the above-described embodiments. Namely, a rotating casing is coupled to a trunnion shaft, and refining gas, protective gas and cooling water supply pipes are connected to a stationary assembly.

A casing 202 of a rotary joint 201 comprises a first cylindrical member 203 and a second cylindrical member 204 having different diameters. In the internal surface of the first cylindrical member 203 at the far side are provided two axially spaced, circular communication grooves 205. The first cylindrical member 203 has communication ports 206 opening into the individual communication grooves 205, too. Protective gas conduits 207 are connected so as to communicate with the communication grooves 205 through the communication ports 206.

The second cylindrical member 204, which has a slightly smaller diameter than the first cylindrical member 203, is connected with bolts etc. to a trunnion shaft 208 at the near end and has a cylindrical projection 210 which extends backward (to the right in the figure) from the inner part of the far end. To this second cylindrical member 204 are attached an entry-side cooling water pipe 212 communicating with an annular space 211 formed on the inside of the projection 210 and an exit-side cooling water pipe 214 communicating with an annular space 213 formed on the outside of the projection 210.

A stationary assembly 215 comprises an inner pipe 216, an outer pipe 217. and an outer cylinder 218, the far ends of which are connected to a body 219.

The inner pipe 216, disposed innermost, is connected to a refining gas supply pipe 221 through an elbow 220 at the far end, and opens. at the near end, toward an intermediate pipe 223 placed in a horizontal opening 222 in the trunnion shaft 208. The near end of the inner pipe 216 constitutes a sliding part 224 which rotatably fits in the secondary cylindrical member 204. A ball bearing 225 and an O-ring 226 are interposed between the internal surface of the second cylindrical member 204 and the external surface of the sliding part 224.

The near end of the outer pipe 217 rotatably fits in the far end of the projection 210, with an O-ring 227 interposed therebetween.

In the outer cylinder 218 is provided a conduction port 229 which opens into the communication port 205 at one end and into the atmosphere, at the other end, in a part 228 emerging from the first cylindrical member 203 of the casing 202. A protective gas supply pipe 230 is connected to the exposed part 228 so as to communicate with the conduction port 229. A ball bearing 231 and an O-ring 232 are interposed between the internal surface of the first cylindrical member 203 and the external surface of the outer cylinder 218.

A cooling water supply pipe 233 and discharge pipe 234 are connected to the body 219 of the stationary assembly 215. The former communicates with the entry-side cooling water pipe 212 by way of an annular space 235 between the inner pipe 216 and outer pipe 217, while the latter communicates with the exit-side cooling water pipe 214 by way of an annular space between the outer pipe 217 and outer cylinder 218.

The rotary joint 201 of this embodiment functions like the foregoing embodiments, except that the casing 202 rotates integrally with the trunnion shaft 208 and that the inner pipe 216, outer pipe 217 and outer cylinder 218 remain stationary.

## Claims

1. A converter comprising an apparatus for supplying fluids, the converter (1) being supported by a tiltable trunnion ring (36) having horizontally projecting trunnion shafts (37) and having a plurality of tuyeres (6) at the bottom (5) thereof, each tuyere (6) comprising a refining gas injection nozzle (7) and an annular protective gas injection nozzle (8) coaxially surrounding said first nozzle (7), the apparatus having means for supplying a refining gas and a protective gas to said refining gas injection nozzle (7) and annular protective gas injection nozzle (8), respectively, comprising a rotary joint (35) which comprises a fixed casing (39, 92, 104, 112) and a rotary assembly (40, 96) sealedly and rotatably fitted in the casing (39, 92, 104, 112) and coupled to a trunnion shaft (37), a refining gas supply pipe (45) and protective gas supply pipes (68, 69, 95) connected to the rotary joint (35), a refining gas conduit (59, 83), and protective gaz conduits (73, 74, 98) connecting the rotary joint (35) with the tuyeres (6), wherein
a) the rotary assembly (40, 96) has a cylindrical means (53, 90, 97) fitted in said casing (39, 92, 104, 112),
b) a plurality of axially spaced, circular communication grooves (64, 65, 91, 94) are provided in at least one of the internal surface of the casing (39, 92, 104, 112) and the external surface of the cylindrical means (53, 90, 97),
c) said protective gas supply pipes (68, 69, 95) are attached to the casing (39, 92, 104, 112) so as to communicate with the individual communication grooves (64, 65, 91, 94),
d) a plurality of passageways (70, 71) is provided in the cylindrical means (53, 90, 97), the passageways (70, 71) opening into the respective communication grooves (64, 65, 91, 94) at one end and into that part (72) of the cylindrical means (53, 90, 97) which is exposed out of the casing (39, 92, 104, 112) at the other end,
e) each of said protective gas conduits (73, 74, 98) is attached to said exposed part (72) of the cylindrical means (53, 90, 97) so as to communicate with said passageways (70, 71),
f) an inner pipe (51, 99, 109) is coaxially disposed inside the cylindrical means (53, 90, 97) so as to leave an annular space therebetween, the inner pipe (51) communicating with the refining gas supply pipe (45) at one end and the refining gas conduit (59, 93) at the other,
g) an outer pipe (52, 101) is coaxially provided so as to leave an annular space (76) between the outer pipe (52, 101) and said cylindrical means (53, 90, 97), and an annular space (61, 102) between the outer pipe (52, 101) and said inner pipe (51, 99, 109), and
h) a flow-rate control valve (88, 89) is provided to each of said protective gas supply pipes (68, 69).

2. A converter according to claim 1, in which a means (108) detecting gas in the annular space (102) between said inner pipe (99) and said outer pipe (101) is provided.

3. A converter according to claim 1 or 2, in which a conduit (110) carrying electrical wire (116) and extending to the bottom is provided inside said inner pipe (109), an electric connector (117) being provided to that part (111) of the conduit (110) which projects outside the inner pipe (109).

4. A converter according to claims 1 to 3, in which a passageway (155) substantially extending along a quadrant is provided in said trunnion ring (150) and shaft (151), said passageway (155) opening in the end surface (153) of the trunnion shaft (151) at one end and in the top or bottom surface (159, 154) of the trunnion ring (150) at the other.

5. A converter according to claims 1 to 4, in which a funnel-shaped sleeve (160) extending from the end surface of the trunnion shaft to the trunnion shaft joint (162) and the side of the trunnion ring (163) is provided, said sleeve (160) having a fluid passageway (164) on the inside, with that end of the sleeve (160) which is closer to the end surface of the trunnion shaft being held between the external surface of the trunnion shaft and a trunnion bearing (161).

6. A converter according to claims 1 to 5, in which means supporting the rotary joint is provided, said supporting means comprising a counter weight (176) attached to the casing of the rotary joint so as to reduce the weight thereof and a rotation preventing mechanism (172, 173) attached to the casing.

7. A converter according to claims 1 to 6, in which at least one pressure-balancing flexible pipe (181, 183, 188, 189, 190, 199, 200) is provided in the vicinity of the joint between said fluid supply pipes (180, 182) and said rotary joint (179).

8. A method for supplying fluids to a converter according to any of claims 1 to 7, characterized in that a sealing gas is filled in the annular space (61, 102) between said inner pipe (51, 99) and said outer pipe (51, 101).

9. A converter comprising an apparatus for supplying fluids, the converter being supported by a tiltable trunnion ring having horizontally projecting trunnion shafts (208) and having a plurality of tuyeres at the bottom thereof, each tuyere comprising a refining gas injection nozzle and an annular protective gas injection nozzle coaxially surrounding said first nozzle, the apparatus having means for supplying a refining gas and a protective gas to said refining gas injection nozzle and annular protective gas injection nozzle, respectively, comprising a rotary casing (202) connected to a trunnion shaft (208), a rotary joint (201) comprising a stationary assembly sealedly and rotatably fitted in the casing (202), a refining gas supply pipe (221) and protective gas supply pipes (230) connected to the rotary joint (201) and a refining gas conduit (223) and protective gas conduits (207) connecting the rotary joint (201) with the tuyeres, wherein
a) the stationary assembly (215) has a cylindrical member (218) fitting in the casing (202),
b) a plurality of axially spaced, circular communication grooves (205) are provided in at least one of the internal surface of the casing (202) and the external surface of the cylindrical member (218),
c) a plurality of passageways (229) is provided in the cylindrical member (218), each passageway (229) opening into the respective communication groove at one end and into that part (228) of the cylindrical member (218) which is exposed out of the casing (202) at the other end, and
d) said protective gas supply pipes (230) are connected to openings (206) provided in that part (228) of the cylindrical member (218) exposed out of the casing (202),
e) each of said protective gas conduits (207) is attached to the casing (202) so as to communicate with a communication groove (205),
f) an inner pipe (216) is coaxially disposed inside the cylindrical member (218) so as to leave an annular space therebetween, the inner pipe (216) communicating with the refining gas supply pipe (221) at one end and the refining gas conduit (223) at the other,
g) an outer pipe (217) is coaxially provided so as to leave an annular space (236) between the outer pipe and said cylindrical member (218), and an annular space (235) between the outer pipe (217) and said inner pipe (216), and
h) a flow-rate control valve is provided to each of said protective gas supply pipes (230).

## Patentansprüche

1. Konverter mit einer Vorrichtung zum Zuführen von Fluida, wobei der Konverter (1) von einem kippbaren Zapfenring (36) mit horizontal herausragenden Zapfenschäften (37) und mit mehreren Windformen (6) an seinem Boden (5) getragen wird, wobei jede Windform (6) eine Frisch-Gas-Einblasduse (7) und eine ringförmige Schutzgas-Einblasdüse (8), die die erste Düse (7) koaxial umgibt, aufweist, und wobei die Vorrichtung Einrichtungen zum Zuführen von Frisch-Gas und von Schutzgas zu der Frisch-Gas-Einblasdüse (7) bzw. der ringförmigen Schutzgas-Einblasdüse (8), eine Drehverbindung (35) mit einem feststehenden Gehause (39, 92, 104, 112) und einer Drehanordnung (40, 96), die abgedichtet und drehbar in das Gehause (39, 92, 104, 112) eingepaßt und mit einem Zapfenschaft (37) verbunden ist, ein an der Drehverbindung (35) angeschlossenes Frisch-Gas-Zuführrohr (45) und Schutzgas-Zuführrohre (68, 69, 95), eine Frisch-Gas-Verbindungsleitung (59, 83) und Schutzgas-Verbindungsleitungen (73, 74, 98) aufweist, die die Drehverbindung (35) mit den Windformen (6) verbindet, wobei
a) die Drehanordnung (40, 96) eine in dem Gehause (39, 92, 104, 112) eingepaßte zylindrische Einrichtung (53, 90, 97) aufweist,
b) mehrere axial beabstandete kreisförmige Verbindungsnuten (64, 65, 91, 94) in zumindest einer der Innenflache des Gehauses (39, 92, 104, 112) und der Außenfläche der zylindrischen Einrichtung (53, 90, 97) angeordnet sind,
c) Schutzgas-Zuführrohre (68, 69, 95) derart an dem Gehäuse (39, 92, 104, 112) befestigt sind, daß sie mit den einzelnen Verbindungsnuten (64, 65, 91, 94) kommunizieren,
d) mehrere Durchgänge (70, 71) in der zylindrischen Einrichtung (53, 90, 97) angeordnet sind, die sich an einem Ende in die entsprechenden Verbindungsnuten (64, 65, 91, 94) und an dem anderen Ende in das Teil (72) der zylindrischen Einrichtung (53, 90, 97) öffnen, das aus dem Gehäuse (39, 92, 104, 112) herausragt,
e) jede der Schutzgas-Verbindungsleitungen (73, 74, 98) derart an dem herausragenden Teil (72) der zylindrischen Einrichtung (53, 90, 97) befestigt ist, daß sie mit den Durchgängen (70, 71) kommuniziert,
f) eine Innenröhre (51; 99, 109) koaxial innerhalb der zylindrischen Einrichtung (53; 90, 97) angeordnet ist, so daß dazwischen ein ringförmiger Raum verbleibt, wobei die Innenröhre (51) an einem Ende mit dem Frisch-Gas-Zuführrohr (45) und am anderen Ende mit der Frisch-Gas-Verbindungsleitung (59, 83) kommuniziert,
g) eine Außenröhre (52; 101) koaxial angeordnet ist, so daß ein ringförmiger Raum (76) zwischen der Außenröhre (52; 101) und der zylindrischen Einrichtung (53, 90, 97) und ein ringförmiger Raum (61; 102) zwischen der Außenröhre (52; 101) und der Innenröhre (51; 99, 109) freibleibt, und
h) an jedem der Schutzgas-Zuführrohre (68, 69) ein Flußmengen-Steuerventil (88, 89) angeordnet ist.

2. Konverter nach Anspruch 1, wobei eine Einrichtung (108) zum Detektieren von Gas in dem ringförmigen Raum (102) zwischen der Innenröhre (99) und der Außenröhre (101) vorgesehen ist.

3. Konverter nach Anspruch 1 oder 2, wobei eine Verbindungsleitung (110), die eine elektrische Leitung (116) mitführt und bis zum Boden reicht, innerhalb der Innenröhre (109) und ein elektrischer Verbinder (117) an dem Teil (111) der Verbindungsleitung (110) angeordnet ist, das aus der Innenröhre (109) herausragt.

4. Konverter nach einem der Ansprüche 1 bis 3, wobei ein Durchgang (155), der sich im wesentlichen entlang eines Quadranten erstreckt, in dem Zapfenring (150) und dem Schaft (151) angeordnet ist und sich an einem Ende in die Endfläche (153) des Zapfenschafts (151) und an dem anderen in die Deck- oder Bodenfläche (159; 154) des Zapfenrings (150) öffnet.

5. Konverter nach einem der Ansprüche 1 bis 4, wobei eine trichterförmige Hülse (160) sich von der Endfläche des Zapfenschafts bis zur Zapfenschaftverbindung (162) und der Seite des Zapfenrings (163) erstreckt und einen innenliegenden Fluid-Durchgang (164) aufweist, und wobei das Ende der Hülse (160), das der Endoberfläche des Zapfenschafts näher ist, zwischen der Außenfläche des Zapfenschafts und einem Zapfenlager (161) gehalten wird.

6. Konverter nach einem der Ansprüche 1 bis 5, mit einer die Drehverbindung stützenden Trageinrichtung, die ein an dem Gehäuse der Drehverbindung angebrachtes Gegengewicht (176) zum Reduzieren des Gewichts und einen an dem Gehäuse angebrachten Drehschutzmechanismus (172, 173) aufweist.

7. Konverter nach einem der Ansprüche 1 bis 6, wobei zumindest eine flexible Druckausgleichsröhre (181, 183, 188, 189, 190, 199, 200) in der Nähe der Verbindung zwischen den Fluid-Zuführrohren (180, 182) und der Drehverbindung (179) angeordnet ist.

8. Verfahren zum Versorgen eines Konverters nach einem der Ansprüche 1 bis 7 mit Fluida, dadurch gekennzeichnet, daß der Ringraum (61, 102) zwischen der Innenröhre (51; 99) und der Außenröhre (51; 101) mit einem Abdichtgas gefüllt ist.

9. Konverter mit einer Vorrichtung zum Zuführen von Fluida, wobei der Konverter von einem kippbaren Zapfenring mit horizontal herausragenden Zapfenschäften (208) und mit mehreren Windformen an seinem Boden getragen wird, wobei jede Windform eine Frisch-Gas-Einblasdüse und eine ringförmige Schutzgas-Einblasdüse, die die erste Düse koaxial umgibt, aufweist, und wobei die Vorrichtung Einrichtungen zum Zuführen von Frisch-Gas und von Schutzgas zu der Frisch-Gas-Einblasdüse bzw. der ringförmigen Schutzgas-Einblasdüse, ein mit einem Zapfenschaft (208) verbundenes Drehgehäuse (202), eine Drehverbindung (201) mit einer stationären, abgedichtet und drehbar in dem Gehäuse (202) eingepaßte Anordnung, ein an der Drehverbindung (201) angeschlossenes Frisch-Gas-Zuführrohr (221) und ebenso daran angeschlossene Schutzgas-Zuführrohre (230), und eine Frisch-Gas-Verbindungsleitung (223) und Schutzgas-Verbindungsleitungen (207) aufweist, die die Drehverbindung (201) mit den Windformen verbinden, wobei
a) die stationäre Anordnung (215) ein in dem Gehäuse (202) eingepaßtes zylindrisches Element (218) aufweist,
b) mehrere axial beabstandete, kreisförmige Verbindungsnuten (205) zumindest in einer der Innenfläche des Gehäuses (202) und der Außenfläche des zylindrischen Elements (218) angeordnet sind,
c) mehrere in dem zylindrischen Element (218) angeordnete Durchgänge (229) vorgesehen sind, wobei jeder Durchgang (229) an einem Ende in die entsprechende Verbindungsnut und an dem anderen Ende in den Teil (228) des zylindrischen Elements (218) öffnet, der aus dem Gehäuse (202) herausragt,
d) die Schutzgas-Zuführrohre (230) mit Öffnungen (206) verbunden sind, die in dem Teil (228) des zylindrischen Elements (218) angeordnet sind, der aus dem Gehäuse (202) herausragt,
e) jede der Schutzgas-Verbindungsleitungen (207) an dem Gehäuse (202) derart befestigt ist, daß sie mit einer Verbindungsnut (205) kommuniziert,
f) eine Innenröhre (216) koaxial innerhalb des zylindrischen Elements (218) angeordnet ist, so daß dazwischen ein ringförmiger Raum verbleibt, wobei die Innenröhre (216) an einem Ende mit dem Frisch-Gas-Zuführrohr (221) und am anderen Ende mit der Frisch-Gas-Verbindungsleitung (223) kommuniziert,
g) eine Außenröhre (217) koaxial angeordnet ist, so daß ein ringförmiger Raum (236) zwischen der Außenröhre und dem zylindrischen Element (218) und ein ringförmiger Raum (235) zwischen der Außenröhre (217) und der Innenröhre (216) freibleibt, und
h) an jedem der Schutzgas-Zuführrohre (230) ein Flußmengen-Steuerventil angeordnet ist.

## Revendications

1. Un convertisseur comprenant un dispositif pour l'alimentation en fluides, le convertisseur (1) étant supporté par une frette à tourillons basculante (36) comportant des arbres de tourillons faisant saillie horizontalement (37) et comportant une pluralité de tuyères (6) à sa base (5), chaque tuyère (6) comprenant une buse d'injection de gaz d'affinage (7) et une buse annulaire d'injection de gaz protecteur (8) entourant coaxialement ladite première buse (7), le dispositif comportant des moyens pour alimenter un gaz d'affinage (7) et un gaz protecteur auxdites buse d'injection de gaz d'affinage (7) et buse annulaire d'injection de gaz protecteur (8), respectivement, constitués par un joint tournant (35) qui comprend un corps fixe (39, 92, 104, 112) et un ensemble tournant (40, 96) emboîté de manière étanche et avec possibilité de rotation dans le corps (39, 92, 104, 112) et accouplé à un tourillon (37), un tube d'alimentation en gaz d'affinage (45) et des tubes d'alimentation en gaz protecteur (68, 69, 95) reliés au joint tournant (35), un conduit de gaz d'affinage (59, 83) et des conduits de gaz protecteur (73, 74, 98) reliant le joint tournant (35) aux tuyères (6), dans lequel
a) l'ensemble tournant (40, 96) comporte un moyen cylindrique (53, 90, 97) emboîté dans ledit corps (39, 92, 104, 112),
b) une pluralité de gorges de communication circulaires espacées axialement (64, 65, 91, 94) sont ménagées dans l'une au moins de la surface interne du corps (39, 92, 104, 112) et de la surface externe du moyen cylindrique (53, 90, 97),
c) lesdits tubes d'alimentation en gaz protecteur (68, 69, 95) sont fixés sur le corps (39, 92, 104, 112) de façon à communiquer avec les gorges de communication individuelles (64, 65, 91, 94),
d) une pluralité de passages (70, 71) est prévue dans le moyen cylindrique (53, 90, 97), les passages (70, 71) débouchant à une extrémité dans les gorges de communication respectives (64, 65, 91, 94) et à l'autre extrémité dans la partie (72) du moyen cylindrique (53, 90, 97) qui est en dehors du corps (39, 92, 104, 112),
e) chacun desdits conduits de gaz protecteur (73, 74, 98) est fixé à ladite partie (72) en dehors du moyen cylindrique (53, 90, 97) de façon à communiquer avec lesdits passages (70, 71),
f) un tube intérieur (51, 99, 109) est disposé coaxialement à l'intérieur du moyen cylindrique (53, 90, 97) de façon à ménager entre eux un espace annulaire, le tube intérieur (51) communiquant à une extrémité avec le tube d'alimentation en gaz d'affinage (45) et, à l'autre, avec le conduit de gaz d'affinage (59, 83) et
g) un tube extérieur (52, 101) est disposé coaxialement de façon à ménager un espace annulaire (76) entre le tube extérieur (52, 101) et ledit moyen cylindrique (53, 90, 97) et un espace annulaire (61, 102) entre le tube extérieur (52, 101) et ledit tube intérieur (51, 99, 109), et
h) une vanne de réglage de débit (88, 89) est prévue sur chacun desdits tubes d'alimentation en gaz protecteur (68, 69).

2. Un convertisseur selon la revendication 1, dans lequel est prévu un moyen (108) décelant la présence de gaz dans l'espace annulaire (102) entre ledit tube intérieur (99) et ledit tube extérieur (101).

3. Un convertisseur selon la revendication 1 ou 2, dans lequel un conduit (110) renfermant un fil électrique (116) et s'étendant jusqu'au fond est prévu à l'intérieur dudit tube intérieur (109), un dispositif de raccordement électrique (117) étant prévu sur la partie (111) du conduit (110) qui dépasse à l'extérieur du tube intérieur (109).

4. Un convertisseur selon les revendications 1 à 3, dans lequel un passage (155) s'étendant sensiblement sur un quadrant est prévu dans ladite frette à tourillons (150) et dans ledit arbre (151), ledit passage (155) débouchant à une extrémité dans la surface d'extrémité (153) de l'arbre du tourillon (151) et, à l'autre extrémité, dans la surface supérieure ou inférieure (159, 154) de la frette à tourillons (150).

5. Un convertisseur selon les revendications 1 à 4, dans lequel un manchon en entonnoir (160) allant de la surface d'extrémité de l'arbre du tourillon au joint de l'arbre de tourillon (162) et au côté de la frette à tourillons (163) est prévu, ledit manchon (160) présentant à l'intérieur un passage de fluide (164), avec l'extrémité du manchon (160) qui est plus proche de la surface d'extrémité de l'arbre du tourillon étant maintenue entre la surface externe de l'arbre du tourillon et un palier de tourillon (161).

6. Un convertisseur selon les revendications 1 à 5, dans lequel un moyen supportant le joint tournant est prévu, ledit moyen support comprenant un contrepoids (176) fixé au corps du joint tournant de façon à en réduire le poids et un mécanisme empêchant la rotation (172, 173) fixé au corps.

7. Un convertisseur selon les revendications 1 à 6, dans lequel au moins un tube souple d'équilibrage de la pression (181, 183, 188, 189, 190, 199, 200) est prévu au voisinage du joint entre lesdits tubes d'alimentation en fluide (180, 182) et ledit joint tournant (179).

8. Un procédé pour l'alimentation en fluides d'un convertisseur selon l'une quelconque des revendications 1 à 7,
caractérisé en ce qu'un gaz d'étanchéité est rempli dans l'espace annulaire (61, 102) entre ledit tube intérieur (51, 99) et lesdits tubes extérieurs (51, 101).

9. Un convertisseur comprenant un dispositif pour l'alimentation en fluides, le convertisseur étant supporté par une frette à tourillons basculante ayant des arbres de tourillons faisant saillie latéralement (208) et comportant une pluralité de tuyères à sa base, chaque tuyère comprenant une buse d'injection de gaz d'affinage et une buse annulaire d'injection de gaz protecteur entourant coaxialement ladite première buse, le dispositif comportant des moyens pour alimenter un gaz d'affinage et un gaz protecteur auxdites buse d'injection de gaz d'affinage et buse annulaire d'injection de gaz protecteur, respectivement, comprenant un corps tournant (202) relié à un arbre de tourillon (208), un joint tournant (201) comprenant un ensemble fixe emboîté de manière étanche et à rotation dans le corps (202), un tube d'alimentation en gaz d'affinage (221) et des tubes d'alimentation en gaz protecteur (230) reliés au joint tournant (201) et un conduit pour le gaz d'affinage (223) et des conduits pour le gaz protecteur (207) reliant le joint tournant (201) aux tuyères, dans lequel
a) l'ensemble fixe (215) comporte un élément cylindrique (218) emboîté dans le corps (202),
b) une pluralité de gorges de communication circulaires espacées axialement (205) sont ménagées dans l'une au moins de la surface interne du corps (202) et de la surface externe de l'élément cylindrique (218),
c) une pluralité de passages (229) est prévue dans l'élément cylindrique (218), chaque passage (229) débouchant à une extrémité dans la gorge de communication respective et à l'autre extrémité dans la partie (228) de l'élément cylindrique (218) qui est en dehors de l'enveloppe (202) et
d) lesdits tubes d'alimentation en gaz protecteur (230) sont connectés à des orifices (206) réalisés dans la partie (228) de l'élément cylindrique (218) qui est à l'extérieur du corps (202),
e) chacun desdits conduits de gaz protecteur (207) est fixé sur le corps (202) de façon à communiquer avec une gorge de communication (205),
f) un tube intérieur (216) est disposé coaxialement à l'intérieur de l'élément cylindrique (218) de façon à ménager un espace annulaire entre eux, le tube intérieur (216) communiquant à une extrémité avec le tube d'alimentation en gaz d'affinage (221) et, à l'autre, avec le conduit de gaz d'affinage (223),
g) un tube extérieur (217) est disposé coaxialement de façon à ménager un espace annulaire (236) entre le tube extérieur et ledit élément cylindrique (218) et un espace annulaire (235) entre le tube extérieur (217) et ledit tube intérieur (216), et
h) une vanne de réglage de débit est prévue sur chacun desdits tubes d'alimentation en gaz protecteur (230).
